# EUROPÄISCHE PATENTANMELDUNG

(11) **EP 2 343 513 A2**
(43) Veröffentlichungstag der Anmeldung: **13.07.2011**
(21) Anmeldenummer: 10186792.7
(22) Anmeldetag: 07.10.2010
(51) Int. Cl.: G01D 9/00

(54) **Vorrichtung und Verfahren zur Aufnahme von Messdaten einer Messgröße**

(30) Priorität: 30.12.2009 DE 102009055406
(71) Anmelder: Deutsche Post AG, 53113 Bonn (DE)
(72) Erfinder: Nentwig, Georg, 53129, Bonn (DE)
(74) Vertreter: Dieckhoff, Beate

(57) **Zusammenfassung**

Die Erfindung betrifft eine Vorrichtung (101) zur Aufnahme von Messdaten für mindestens eine Messgröße. Die Vorrichtung umfasst wenigstens ein Aktivierungselement (106) zur Aktivierung und/oder Deaktivierung eines Messvorgangs zur Aufnahme der Messdaten, wobei das Aktivierungselement in Verbindung mit einer Elektronik (104) zur Steuerung des Messvorgangs steht. Das Aktivierungselement wiederum umfasst mindestens einen Sensor (107), der Mittel zur Weiterleitung eines Impulses an die Elektronik aufweist, wobei durch diesen Impuls der Messvorgang aktivierbar und/oder deaktivierbar ist. Dabei ist die Elektronik als organische Elektronik und jeder Sensor als lichtempfindlicher Sensor ausgebildet. Über jedem Sensor ist mindestens ein lichtundurchlässiges Abdeckelement (108) angeordnet, wobei das Abdeckelement so ausgebildet ist, dass es einen Lichteinfall auf den jeweiligen Sensor verhindert und dass es mechanisch entfernbar ist. Zudem ist jeder Sensor so ausgebildet, dass der Impuls an die Elektronik durch einen kurzzeitigen Lichteinfall auf den Sensor auslösbar ist.

## Beschreibung

Die Erfindung betrifft eine Vorrichtung zur Aufnahme von Messdaten für mindestens eine Messgröße. Die Vorrichtung umfasst dabei ein Aktivierungselement zur Aktivierung und/oder Deaktivierung eines Messvorgangs zur Aufnahme der Messdaten, wobei das Aktivierungselement in Verbindung mit einer Elektronik zur Steuerung des Messvorgangs steht.

Die Erfindung betrifft ferner ein Verfahren zur Aufnahme von Messdaten einer Messgröße, bei dem eine solche Vorrichtung eingesetzt wird.

Im Logistikbereich ist es oftmals erforderlich, beim Transport eines Gutes eine vorgegebene Messgröße zu überwachen. Beispielsweise ist ein temperaturüberwachter Transport notwendig, um Qualität und Haltbarkeit temperatursensibler Produkte, wie beispielsweise Lebensmittel, Laborproben oder Medikamente, bei einem Transport zu gewährleisten. Dabei gilt es insbesondere, den Temperaturverlauf während des gesamten Transports zu überwachen. Dafür werden beispielsweise Temperatur- und Zeitdaten erfasst und aufgezeichnet sowie das Über- oder Unterschreiten von vorgegebenen Sollwerten festgestellt.

Um solche Messgrößen beim Transport eines Gutes zu überwachen, können Transportbehälter integrierte Sensormodule umfassen. Derartige Transportbehälter umfassen bei temperatursensiblen Gütern vorzugsweise auch eine Isolierung und/oder Kühlaggregate. Um die während des Transports erfassten Daten auszulesen, kann das Sensormodul einen Anschluss für ein Lesegerät und/oder eine berührungslose Schnittstelle zum Auslesen von Daten beispielsweise mittels RFID-Technologie aufweisen.

Es ist jedoch auch möglich, mobile Sensormodule einzusetzen, die beispielsweise zusätzlich zu dem zu transportierenden Gut in einen Transportbehälter bzw. eine Transportverpackung eingelegt werden. Für die Temperaturüberwachung während eines Transports haben sich in der Vergangenheit insbesondere mobile Sensormodule mit einer Antenne etabliert, die kontinuierlich Temperaturdaten aufnehmen und berührungslos mittels eines Lesegerätes ausgelesen werden können. Dazu wird ein Sensormodul nach dem Transport aus dem Transportbehälter entnommen. Die ausgelesenen Messdaten werden anschließend aufbereitet, beispielsweise auf einem Server hinterlegt und stehen dort zur Qualitätskontrolle zur Verfügung.

Derartige Sensormodule umfassen eine Vorrichtung zur Aufnahme von Messdaten einer Messgröße, wobei diese Vorrichtungen stetig kleiner, flexibler und kostengünstiger herstellbar sind. Es werden daher immer häufiger unterschiedlichste Prozesse mittels einer kontinuierlichen Datenaufnahme und Datenaufzeichnung messtechnisch überwacht, um eine gleichbleibend hohe Qualität dieser Prozesse zu gewährleisten.

Ein wichtiges Merkmal für die Beurteilung der Prozesse ist dabei sowohl ein genau definierter Aktivierungszeitpunkt für den Beginn des Messvorgangs als auch ein genau definierter Deaktivierungszeitpunkt für die Beendigung des Messvorgangs. Mit einer genauen Definition dieser beiden Zeitpunkte können Fehlinterpretationen in der Qualitätsbewertung der messtechnisch überwachten Prozesse, bedingt durch Messdaten, die außerhalb des eigentlichen Prozesses aufgenommen wurden, vermieden werden.

In der Vergangenheit sind verschiedene Vorrichtungen zur Aufnahme von Messdaten einer Messgröße mit jeweils unterschiedlichen Einrichtungen und Verfahren für das Aktivieren und Deaktivieren eines Messvorgangs zur Anwendung gekommen. So wurden in den Vorrichtungen beispielweise mechanische Taster oder Schalter oder auch Infrarot- oder Hochfrequenzsignale für die Schaltvorgänge des Aktivierens und Deaktivierens verwendet.

Mechanische Einrichtungen für Aktivierungs- und Deaktivierungsvorgänge bringen üblicherweise jedoch den Nachteil mit sich, dass sie nicht sehr zuverlässig sind, da beispielsweise bei einem mechanischen Taster oder Schalter Kontaktschwierigkeiten auftreten können und außerdem die mechanischen Bestandteile einem Verschleiß unterliegen. Zudem ist die Integration dieser mechanischen Einrichtungen teuer und fertigungstechnisch aufwendig.

Die Verwendung von Verfahren mit Infrarot- oder Hochfrequenzsignalen wiederum ist zwar zuverlässig, dafür aber geräteintensiv, da diese Signale nur über spezielle technische Einrichtungen zur Verfügung gestellt werden können.

Eine Aufgabe der Erfindung ist es daher, eine Vorrichtung zur Aufnahme von Messdaten für mindestens eine Messgröße bereitzustellen, bei der die Aktivierung und Deaktivierung eines Messvorgangs möglichst zuverlässig und einfach möglich ist. Dabei soll sich die Vorrichtung insbesondere zur Verwendung in einem flachen und preiswerten Sensormodul eignen.

Eine weitere Aufgabe der Erfindung ist es, ein Verfahren zur Aufnahme von Messdaten für mindestens eine Messgröße bereitzustellen, in dem eine solche Vorrichtung eingesetzt werden kann.

Diese Aufgabe wird gelöst durch eine Vorrichtung mit den Merkmalen des unabhängigen Anspruchs 1. Vorteilhafte Weiterbildungen der Vorrichtung ergeben sich aus den Unteransprüchen 2 bis 10. Die Aufgabe wird ferner durch ein Verfahren nach Anspruch 11 gelöst. Vorteilhafte Ausführungsformen dieses Verfahrens ergeben sich aus den Unteransprüchen 12 bis 15.

Die Erfindung sieht eine Vorrichtung zur Aufnahme von Messdaten für mindestens eine Messgröße vor. Die Vorrichtung umfasst wenigstens ein Aktivierungselement zur Aktivierung und/oder Deaktivierung eines Messvorgangs zur Aufnahme der Messdaten, wobei das Aktivierungselement in Verbindung mit einer Elektronik zur Steuerung des Messvorgangs steht. Das Aktivierungselement wiederum umfasst mindestens einen Sensor, der Mittel zur Weiterleitung eines Impulses an die Elektronik aufweist, wobei durch diesen Impuls der Messvorgang aktivierbar und/oder deaktivierbar ist. Dabei ist die Elektronik als organische Elektronik und jeder Sensor als lichtempfindlicher Sensor ausgebildet. Über jedem Sensor ist mindestens ein lichtundurchlässiges Abdeckelement angeordnet, wobei das Abdeckelement so ausgebildet ist, dass es einen Lichteinfall auf den jeweiligen Sensor verhindert und dass es mechanisch entfernbar ist. Zudem ist jeder Sensor so ausgebildet, dass der Impuls an die Elektronik durch einen auftretenden Lichteinfall auf den Sensor auslösbar ist. Erfolgt somit ein Wechsel von dunkel auf hell, ist dies im Sinne der Erfindung ein eintretender Lichteinfall auf den Sensor, was einen Impuls an die Elektronik auslöst.

In einer Ausgestaltung der Vorrichtung umfasst die Elektronik Mittel zur Auswertung der zeitlichen Reihenfolge von Impulsen des mindestens einen Sensors, wobei durch einen ersten Impuls eines Sensors an die Elektronik der Messvorgang aktivierbar ist, während der Messvorgang durch einen danach folgenden zweiten Impuls des Sensors an die Elektronik deaktivierbar ist.

In einer anderen Ausgestaltung der Vorrichtung hingegen weist das Aktivierungselement zwei Sensoren auf, wobei durch einen ersten Impuls eines ersten Sensors an die Elektronik der Messvorgang aktivierbar ist, während der Messvorgang durch einen danach folgenden zweiten Impuls des zweiten Sensors an die Elektronik deaktivierbar ist.

Eine Weiterbildung der Vorrichtung ist **dadurch gekennzeichnet, dass** die Messgröße eine Temperatur ist, und die Vorrichtung zur Aufnahme von Temperaturdaten einen Temperatursensor umfasst, der in Verbindung mit der Elektronik steht.

In einer Ausgestaltung der Vorrichtung weist die Vorrichtung mindestens ein Befestigungselement auf, mit dem die Vorrichtung an einem Objekt angebracht werden kann. Dabei ist das Befestigungselement so ausgebildet und an der Vorrichtung angeordnet, dass der Lichteinfall auf den mindestens einen Sensor bei Anbringung an einem Objekt unterbrechbar ist. Wird die erfindungsgemäße Vorrichtung nach einem ersten auftretenden Lichteinfall und einem dadurch induzierten Impuls an die Elektronik an einem Objekt angebracht, wird der wenigstens eine Sensor wieder abgedeckt, und wenn die Vorrichtung wieder von dem Objekt entfernt wird, trifft erneut Licht auf den Sensor, was einen zweiten Impuls an die Elektronik erzeugt. In einem Ausführungsbeispiel umfasst das Befestigungselement wenigstens eine Klebefläche, mit dem die Vorrichtung auf einfache Weise an einem Objekt angebracht werden kann. Bei dem Objekt kann es sich beispielsweise um einen Transportbehälter handeln, in dem ein zu überwachendes Gut transportiert wird. Die erfindungsgemäße Vorrichtung kann dann nach der Aktivierung des Messvorgangs so an der Innenseite des Transportbehälters angeklebt werden, dass der Sensor wieder gegen Lichteinfall abgedeckt ist. Möglich ist es jedoch auch, dass die Vorrichtung in einen Transportbehälter eingelegt wird und dass das lichtundurchlässige Verschließen des Transportbehälters eine Abdeckung des Sensors gegen Lichteinfall bewirkt.

Eine Weiterbildung der Vorrichtung sieht vor, dass das Abdeckelement aus einem flexiblen Material ausgebildet ist, das mittels Klebstoff über dem mindestens einen Sensor haftet. Eine andere Weiterbildung ist **dadurch gekennzeichnet, dass** das Abdeckelement als abkratzbare Folie (Scratch-off Folie) ausgebildet ist, die mittels Heißprägeverfahren über dem mindestens einen Sensor aufgebracht ist. In einer anderen Weiterbildung wiederum ist vorgesehen, dass das Abdeckelement aus einem inflexiblen Material ausgebildet und verschiebbar über dem mindestens einen Sensor angeordnet ist. Alle diese beispielhaften Ausführungsformen ermöglichen eine temporäre Abdeckung des Sensors gegen Lichteinfall, wobei diese Abdeckung manuell entfernt werden kann.

Die Vorrichtung zeichnet sich in einer Ausführungsform dadurch aus, dass die Elektronik und/oder der Sensor aufgedruckt sind, und dass eine Energiequelle Bestandteil der Elektronik ist.

Die Erfindung umfasst ferner ein Verfahren zur Aufnahme von Messdaten für mindestens eine Messgröße mit einer Vorrichtung gemäß der vorangegangenen Beschreibung. In dem Verfahren aktiviert und/oder deaktiviert ein Aktivierungselement einen Messvorgang zur Aufnahme der Messdaten und eine Elektronik steuert den Messvorgang. Durch mechanisches Entfernen des mindestens einen lichtundurchlässigen Abdeckelements von dem mindestens einen Sensor trifft kurzfristig Licht auf den lichtempfindlichen Sensor auf, wodurch der Sensor mindestens einen Impuls erzeugt und an die Elektronik weiterleitet, wobei dieser Impuls über die Elektronik eine Aktivierung und/oder Deaktivierung des Messvorgangs auslöst.

In einer Weiterbildung des Verfahrens wird das Abdeckelement zur Freigabe des Lichteinfalls auf den mindestens einen Sensor von dem Sensor abgezogen, abgekratzt oder auf diesem verschoben.

Eine Ausgestaltung des Verfahrens sieht vor, dass für den Beginn der Aufnahme der Messdaten für die Messgröße ein erstes Abdeckelement von einem ersten Sensor entfernt wird, und dass der erste Sensor durch das folgende Auftreffen von Licht einen ersten Impuls erzeugt und an die Elektronik weiterleitet, was die Aktivierung des Messvorgangs auslöst. Für die Beendigung der Aufnahme der Messdaten für die Messgröße wird dann ein zweites Abdeckelement von einem zweiten Sensor entfernt, wobei der zweite Sensor durch das folgende Auftreffen von Licht einen zweiten Impuls erzeugt und an die Elektronik weiterleitet, was wiederum die Deaktivierung des Messvorgangs auslöst.

In einer anderen Ausgestaltung des Verfahrens ist vorgesehen, dass für den Beginn der Aufnahme der Messdaten für die Messgröße das Abdeckelement von einem Sensor entfernt wird, und dass der Sensor durch das nachfolgende Auftreffen von Licht auf den Sensor einen ersten Impuls erzeugt und an die Elektronik weiterleitet, was die Aktivierung des Messvorgangs auslöst. Dieser Sensor wird nach der Aktivierung des Messvorgangs wieder abgedeckt und der gleiche Sensor wird für die Beendigung der Aufnahme der Messdaten für die Messgröße erneut Licht ausgesetzt, wodurch das erneute Auftreffen von Licht auf diesen Sensor einen zweiten Impuls erzeugt, der von dem Sensor an die Elektronik weitergeleitet wird, was die Deaktivierung des Messvorgangs auslöst.

Die zwischenzeitliche Abdeckung des Sensors kann, wie bereits beschrieben, durch Anbringung in einem Objekt wie einem Transportbehälter erfolgen. Eine Ausführungsform des Verfahrens zeichnet sich daher dadurch aus, dass die Vorrichtung zum Abdecken des Sensors nach der Aktivierung des Messvorgangs mittels eines Befestigungselements so an einem Objekt angebracht wird, dass der Lichteinfall auf den Sensor unterbrochen ist.

Die beschriebene Vorrichtung und das zugehörige Verfahren zur Aufnahme von Messdaten für mindestens eine Messgröße haben den Vorteil, dass ein auftretender (kurzzeitiger) Lichteinfall auf einen Sensor einen Messvorgang aktiviert und/oder deaktiviert. Dazu umfasst die Vorrichtung mindestens einen lichtempfindlichen Sensor, der nach dem Auftreten eines Lichteinfalls einen Impuls an eine Elektronik übermittelt, die wiederum den Messvorgang startet. Bei einem erneut auftretenden Lichteinfall auf einen lichtempfindlichen Sensor wird ein weiterer Impuls an die Elektronik übermittelt, die den Messvorgang dann beendet. Zwischen zwei auftretenden Lichteinfällen liegt somit ein Zeitraum von Dunkelheit, in dem der Sensor wieder gegen Lichteinfall abgedeckt ist.

Die Erfindung wendet sich somit ab von Vorrichtungen mit mechanischen Einrichtungen für die Aktivierung und Deaktivierung von Messvorgängen. Die Erfindung wendet sich somit ebenfalls ab von Vorrichtungen, die Verfahren mit Infrarot- oder Hochfrequenzsignalen für die Aktivierung und Deaktivierung der Messvorgänge verwenden.

Ein Vorteil der Erfindung gegenüber Vorrichtungen mit mechanischen Einrichtungen liegt dabei in der hohen Zuverlässigkeit der Schaltvorgänge zum Aktivieren und Deaktivieren eines Messvorgangs. Sowohl das Auftreten von Kontaktschwierigkeiten als auch von Verschleißerscheinungen ist hier ausgeschlossen. Zudem ist die Integration des lichtempfindlichen Sensors in der Vorrichtung einfach und günstig umsetzbar.

Gegenüber Vorrichtungen, die mit Infrarot- oder Hochfrequenzsignalen für die Umsetzung von Schaltvorgängen arbeiten, weist die Erfindung beispielsweise den Vorteil auf, dass Licht generell als Tageslicht oder auch in Form eines einfachen Leuchtmittels allgemein zur Verfügung steht. Spezielle technische Einrichtungen für die Bereitstellung von Licht hingegen sind nicht erforderlich. Ferner können Abdeckungen des Sensors beliebig bereitgestellt werden, wobei eine für das jeweilige Anwendungsgebiet günstige Form gewählt werden kann.

Die zuvor genannten und weitere Vorteile, Besonderheiten und zweckmäßige Weiterbildungen der Erfindung werden auch anhand der Ausführungsbeispiele deutlich, die nachfolgend unter Bezugnahme auf die Figuren beschrieben werden.

Von den Figuren zeigt:
- Fig. 1: eine Messvorrichtung mit einem lichtempfindlichen Sensor; und
- Fig. 2: eine Messvorrichtung mit zwei lichtempfindlichen Sensoren.

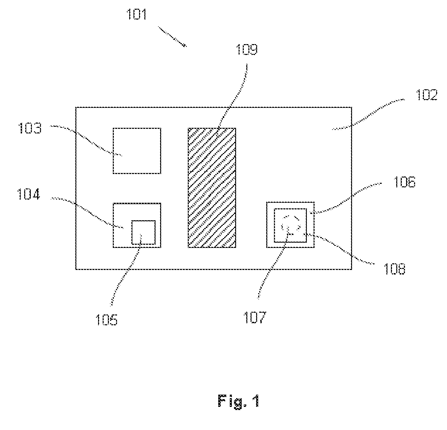

In Fig. 1 ist schematisch das Beispiel einer Messvorrichtung 101 zur Aufnahme von Messdaten für mindestens eine Messgröße dargestellt. Die Messvorrichtung 101 weist als Komponenten ein Trägerelement 102, einen Messfühler 103, eine Elektronik 104 mit einer Batterie 105 sowie ein Aktivierungselement 106 mit einem lichtempfindlichen Sensor 107 und einem Abdeckelement 108 auf. Die Messvorrichtung 101 umfasst außerdem ein Befestigungselement 109.

Das Trägerelement 102 der Messvorrichtung 101 dient zur Aufnahme der einzelnen Komponenten für die Messvorrichtung 101. Es ist als ein flaches, bedruckbares Flächenelement ausgebildet, das aus einer oder auch aus mehreren Materialschichten besteht. Als Material für das Trägerelement 102 können beispielsweise verschiedene Kunststoffe oder Folien, Papier, Karton oder Ähnliches zur Anwendung kommen.

Bei dem Messfühler 103 handelt es sich beispielsweise um einen Temperaturmessfühler zur Aufnahme und Aufzeichnung von Temperaturmessdaten. Es können jedoch auch andere Messfühler, beispielsweise zur Erfassung von Feuchtigkeits- oder Druckmesswerten eingesetzt werden. Auch die Integration mehrerer verschiedener Messfühler in der Messvorrichtung 101 ist möglich. Zwischen dem Messfühler 103 und der Elektronik 104 besteht eine elektrische Verbindung.

Die Elektronik 104 ist vorzugsweise als organische Elektronik ausgebildet, die auch unter dem Begriff der Polymerelektronik allgemein bekannt ist. Eine organische Elektronik verwendet elektronische Schaltungen aus leitfähigen Polymeren. Schaltkreise und elektronische Komponenten werden aus Makromolekülen gebildet, die in Form dünner Filme auf ein Trägersubstrat aufgedruckt werden. Für die Aufnahme der organischen Elektronik umfasst das Trägersubstrat 102 eine organische Folie, auf welche die organische Elektronik 104 aufgedruckt ist.

Ein Bestandteil der Elektronik 104 ist eine Batterie 105 als Energiequelle. Die Batterie 105 weist verschiedene Druckschichten auf und umfasst eine Anode, beispielsweise aus Zink, sowie eine Katode, beispielsweise aus Mangan. Beide Stoffe reagieren miteinander und erzeugen dabei Strom. Während des Verlaufs dieser chemischen Reaktion werden beide Stoffe verbraucht, so dass für die Batterie 105 in Abhängigkeit von Anoden- und Katoden-Schichtdicke eine Lebensdauer definierbar ist.

Sowohl die Elektronik 104 mit der Batterie 105 als auch das Aktivierungselement 106 mit dem lichtempfindlichen Sensor 107, sowie die elektrischen Verbindungen werden beispielsweise mittels eines Druckverfahrens auf das Trägerelement 102 aufgebracht. Mit der Verwendung eines Druckverfahrens für die Ausgestaltung der Komponenten auf dem Trägerelement 102 wird die Realisierung einer sehr flachen Aufbauhöhe für die Messvorrichtung 101 ermöglicht. Zudem ist eine einfache, schnelle und insbesondere kostengünstige Herstellung der Messvorrichtung 101 möglich.

Für das Aufdrucken der einzelnen Komponenten kann beispielsweise ein Siebdruckverfahren genutzt werden. Beim Siebdruckverfahren wird Druckpaste auf ein Trägersubstrat aufgetragen, wobei eine Schablone die Stellen des Trägersubstrats abdeckt, die nicht bedruckt werden sollen. Dieser Vorgang ist beliebig oft mit unterschiedlichen Druckpasten und verschiedenen Schablonen wiederholbar. Die eigentliche Festlegung der einzelnen auszubildenden Komponenten erfolgt über die Auswahl und Zusammensetzung der entsprechenden Druckpasten und zugehörigen Schablonen.

Andere Möglichkeiten für das Aufdrucken der einzelnen Komponenten ergeben sich beispielsweise mit der Anwendung eines Tintenstrahldruckverfahrens oder eines Mikrokontakt-Stempeldruckverfahrens. Da mehrere Druckverfahren verfügbar sind, können die einzelnen Komponenten sowohl nur mit einem einheitlichen als auch mit unterschiedlichen Verfahren aufgedruckt werden.

Zur Befestigung der einzelnen Komponenten auf dem Trägerelement 102 stehen aber auch noch andere Möglichkeiten zur Verfügung. Die Komponenten können beispielsweise auf das Trägerelement 102 aufgeklebt oder auch aufgeschweißt werden. Zudem ist es möglich, ein oder mehrere Komponenten aufzudrucken und die übrigen Komponenten aufzukleben oder aufzuschweißen.

Die Messvorrichtung 101 ist mittels des Befestigungselements 109 an einem beliebigen Objekt fixierbar, so dass ein mobiler Einsatz der Messvorrichtung 101 möglich ist. Als Befestigungselement 109 geeignet erscheint beispielsweise eine Klebefläche, mit der die Messvorrichtung 101 in einfacher Weise an das Objekt angeklebt werden kann. Eine Klettfläche oder andere Vorrichtungen sind als Befestigungselement 109 jedoch auch vorstellbar.

Das über elektrische Verbindungen mit der Elektronik 104 verbundene Aktivierungselement 106 realisiert die eigentliche Anregung der Schaltvorgänge zur Aktivierung und Deaktivierung eines Messvorgangs. Dafür weist das Aktivierungselement 106 wenigstens einen lichtempfindlichen Sensor 107 sowie ein Abdeckelement 108 auf.

Ein lichtempfindlicher Sensor 107 ist ein Lichtsensor, der bei Einwirkung von Licht insbesondere seine elektrischen Eigenschaften ändert. Lichtsensoren werden beispielsweise zum Auslösen von Schaltvorgängen verwendet. Beispiele für Lichtsensoren sind Fotowiderstände, Fotodioden, Fototransistoren oder auch Fotozellen, die sich insbesondere durch ihre unterschiedlichen Reaktionszeiten und Lichtempfindlichkeiten voneinander unterscheiden.

Fotowiderstände, Fotodioden und Fototransistoren nutzen den inneren fotoelektrischen Effekt, Fotozellen den äußeren fotoelektrischen Effekt. Der innere fotoelektrische Effekt tritt in Halbleitern auf. Als äußerer fotoelektrischer Effekt wird hingegen das Herauslösen von Elektronen aus Metalloberflächen durch Bestrahlung mit Licht bestimmter Frequenzen bezeichnet. Sowohl der innere als auch der äußere fotoelektrische Effekt führen dazu, dass bei einem auftretenden Lichteinfall auf den Lichtsensor ein Schaltvorgang induziert werden kann.

Über dem lichtempfindlichen Sensor 107 des Aktivierungselements 106 ist das Abdeckelement 108 angeordnet, das den lichtempfindlichen Sensor 107 vor einem unbeabsichtigten Lichteinfall schützt, wobei für das Abdeckelement 108 unterschiedliche Gestaltungsvarianten zur Verfügung stehen.

Eine Gestaltungsmöglichkeit für das Abdeckelement 108 ist beispielsweise die Verwendung eines einfachen lichtundurchlässigen flexiblen Streifens, beispielsweise aus Papier oder Folie. Dieser flexible Streifen umfasst einen Bereich, der den gesamten lichtempfindlichen Sensor 107 überdeckt und dort beispielsweise mittels eines Klebstoffs haftet, sowie einen weiteren Bereich, der nicht haftet und frei zugänglich ist. Bekannt ist ein derartiger Streifen beispielsweise auch als sogenannte Abrissfahne. Zum Auslösen eines Schaltvorgangs wird der Streifen einfach an dem nichthaftenden Bereich gefasst und vom lichtempfindlichen Sensor 107 abgezogen oder auch abgerissen, so dass nun Licht auf den lichtempfindlichen Sensor 107 auftreffen kann, was einen Impuls an die Elektronik auslöst.

Ebenfalls möglich als Gestaltungsvariante für das Abdeckelement 108 ist eine lichtundurchlässige Folie, die mittels eines Heißprägeverfahrens über dem gesamten lichtempfindlichen Sensor 107 appliziert wird und diesen vollständig abdeckt. Ein Schaltvorgang wird dann ausgelöst, wenn die Folie abgekratzt wurde (Scratch-off Folie) und so Licht auf den lichtempfindlichen Sensor 107 auftreffen kann, was einen Impuls an die Elektronik auslöst.

Bei der Verwendung eines inflexiblen Materials für das Abdeckelement 108, beispielsweise aus Karton oder Plastik, ist eine Gestaltung als Schiebeelement möglich, das in Führungsschienen über dem lichtempfindlichen Sensor 107 verschiebbar gelagert ist. Damit Licht zum Auslösen eines Schaltvorgangs auf den lichtempfindlichen Sensor 107 auftreffen kann, wird das Schiebelement einfach in den Führungsschienen über dem lichtempfindlichen Sensor 107 verschoben.

Weiterhin möglich ist eine Gestaltung des Abdeckelements 108 als Klappe mit einem Scharnier, das beispielsweise aus einer Perforation gebildet wird, sowie einem Griffelement zum Fassen der Klappe, die über dem lichtempfindlichen Sensor 107 angeordnet ist und diesen vollständig abdeckt. Vergleichbar ist diese Gestaltungsvariante beispielsweise mit einer Tür mit Türgriff. Zum Auslösen eines Schaltvorgangs wird die Klappe am Griffelement gefasst und aufgeklappt, so dass Licht auf den lichtempfindlichen Sensor 107 auftreffen kann, was einen Impuls an die Elektronik auslöst.

Während die Gestaltungsvarianten flexibler Streifen und abkratzbare Folie irreversible Möglichkeiten abbilden, handelt es sich bei den Varianten Schiebeelement und Klappe für das Abdeckelement 108 um reversible Möglichkeiten zum Abdecken des lichtempfindlichen Sensors 107.

Gestartet wird ein Messvorgang zur Aufnahme von Messdaten einer Messgröße über das Aktivierungselement 106. Zur Aktivierung der Messvorrichtung 101 wird das über dem lichtempfindlichen Sensor 107 angeordnete Abdeckelement 108 entfernt, so dass kurzzeitig Licht auf den lichtempfindlichen Sensor 107 auftreffen kann. Der dabei erzeugte erste Lichtimpuls wird über die vorhandenen elektrischen Verbindungen an die Elektronik 104 übertragen. Als Folge dieses ersten Lichtimpulses erzeugt die Elektronik 104 einen ersten elektrischen Impuls, der über die vorhandenen elektrischen Verbindungen an den Messfühler 103 weitergeleitet wird. Daraufhin beginnt der Messfühler 103 mit der Aufnahme von Messdaten, die er über die elektrischen Verbindungen zurück an die Elektronik 104 leitet.

Damit ein erneuter Lichteinfall auf den lichtempfindlichen Sensor 107 realisiert werden kann, wird der lichtempfindliche Sensor 107 nach der Aktivierung des Messvorgangs vorzugsweise wieder abgedeckt. Dies kann beispielsweise dadurch umgesetzt werden, dass eine der reversiblen Möglichkeiten zum Abdecken des lichtempfindlichen Sensors 107 zum Einsatz kommt, so dass das Abdeckelement 108 nach der Aktivierung des Messvorgangs wieder über dem lichtempfindlichen Sensor 107 angeordnet wird.

Die erforderliche Dauer für den Lichteinfall ergibt sich dabei beispielsweise aus der Art des verwendeten Lichtsensors. Der verwendete Lichtsensor bestimmt mit seiner typischen Reaktionszeit, wie lange es dauert, bis ein Schaltvorgang induziert wird.

Eine andere Möglichkeit zur Abdeckung des lichtempfindlichen Sensors 107 nach dem Aktivieren des Messvorgangs besteht darin, dass die Messvorrichtung 101 mittels des Befestigungselements 109 so an ein Objekt angeklebt wird, dass der lichtempfindliche Sensor 107 von dem Objekt abgedeckt und der Lichteinfall dadurch unterbrochen wird. Dies ist beispielsweise der Fall, wenn die Vorrichtung zusammen mit einem zu überwachenden Gut in einen Transportbehälter eingebracht wird. Der Messvorgang wird auf die beschriebene Art gestartet, um beispielsweise die Temperatur in dem Transportbehälter während des Transports zu überwachen. Dazu wird die aktivierte Vorrichtung im Innern des Transportbehälters angeklebt, wodurch der Lichtsensor wieder abgedeckt wird.

Zur Beendigung des Messvorgangs ist ein zweiter Lichtimpuls durch das Aktivierungselement 106 erforderlich. Zur Deaktivierung der Messvorrichtung 101 wird das über dem lichtempfindlichen Sensor 107 angeordnete Abdeckelement 108 beispielsweise erneut entfernt, so dass wieder ein Lichteinfall auf den lichtempfindlichen Sensor 107 erfolgt. Der dabei erzeugte zweite Lichtimpuls wird über die vorhandenen elektrischen Verbindungen an die Elektronik 104 übertragen. Als Folge dieses zweiten Lichtimpulses erzeugt die Elektronik 104 einen zweiten elektrischen Impuls, der über die vorhandenen elektrischen Verbindungen an den Messfühler 103 weitergeleitet wird. Daraufhin beendet der Messfühler 103 die Aufnahme von Messdaten.

Zu Deaktivierung der Messvorrichtung 101 ist somit ein erneuter Lichteinfall auf den lichtempfindlichen Sensor 107 erforderlich. Entweder muss dafür erneut eine der verwendeten reversiblen Möglichkeiten zum Abdecken des lichtempfindlichen Sensors 107 entfernt werden oder die mittels des Befestigungselements 109 an einem Objekt angeklebte Messvorrichtung 101 wird einfach wieder von dem Objekt abgerissen. Beispielsweise wird die Vorrichtung nach dem Transport eines zu überwachendes Gutes in einem Transportbehälter wieder von diesem Transportbehälter entfernt, was den Lichtsensor freilegt und den Messvorgang wegen des erneut auftretenden Lichteinfalls abbricht.

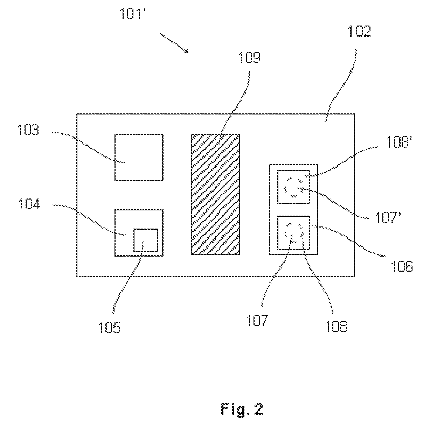

Fig. 2 zeigt schematisch das Beispiel einer anderen Messvorrichtung 101' zur Aufnahme von Messdaten für mindestens eine Messgröße. Die Messvorrichtung 101' weist als Komponenten ebenfalls ein Trägerelement 102, einen Messfühler 103, eine Elektronik 104 mit einer Batterie 105 und ein Aktivierungselement 106 auf. Das Aktivierungselement 106 umfasst hier zwei lichtempfindliche Sensoren 107, 107' und zwei Abdeckelemente 108, 108'. Die Messvorrichtung 101 umfasst außerdem ebenfalls ein Befestigungselement 109.

Gestartet wird ein Messvorgang zur Aufnahme von Messdaten einer Messgröße auch hier über das Aktivierungselement 106. Zur Aktivierung der Messvorrichtung 101' wird das über einem ersten lichtempfindlichen Sensor 107 angeordnete erste Abdeckelement 108 entfernt, so dass kurzzeitig Licht auf den ersten lichtempfindlichen Sensor 107 auftreffen kann. Der dabei erzeugte erste Lichtimpuls wird über die vorhandenen elektrischen Verbindungen an die Elektronik 104 übertragen. Als Folge dieses ersten Lichtimpulses erzeugt die Elektronik 104 einen ersten elektrischen Impuls, der über die vorhandenen elektrischen Verbindungen an den Messfühler 103 weitergeleitet wird. Daraufhin beginnt der Messfühler 103 mit der Aufnahme von Messdaten, die er über die elektrischen Verbindungen zurück an die Elektronik 104 leitet.

Zur Beendigung des Messvorgangs ist ein zweiter Lichtimpuls durch das Aktivierungselement 106 erforderlich. Zur Deaktivierung der Messvorrichtung 101 wird das über einem zweiten lichtempfindlichen Sensor 107' angeordnete zweite Abdeckelement 108' entfernt, so dass kurzzeitig Licht auf den zweiten lichtempfindlichen Sensor 107' auftreffen kann. Der dabei erzeugte zweite Lichtimpuls wird über die vorhandenen elektrischen Verbindungen an die Elektronik 104 übertragen. Als Folge dieses zweiten Lichtimpulses erzeugt die Elektronik 104 einen zweiten elektrischen Impuls, der über die vorhandenen elektrischen Verbindungen an den Messfühler 103 weitergeleitet wird. Daraufhin beendet der Messfühler 103 die Aufnahme von Messdaten.

Die beschriebene Messvorrichtung 101 ist insbesondere aufgrund ihres einfachen und zuverlässigen Aktivierungs- und Deaktivierungsverfahrens flexibel und vielseitig einsetzbar. Die niedrigen Herstellkosten empfehlen es dabei beispielsweise für die Verwendung als Einwegprodukt, dass nach einer einmaligen Verwendung entsorgt werden kann. Dies gilt insbesondere auch dann, wenn die Messvorrichtung 101 mit einem RFID-Transponder kombiniert wird, der für eine Sendungskennzeichnung und -verfolgung während eines Transports verwendet wird und über den die aufgenommenen Messdaten ausgelesen werden können.

Besonders vorteilhaft sind die erfindungsgemäße Vorrichtung und das zugehörige Verfahren somit in Bereichen der Logistik einsetzbar, in denen Messgrößen wie beispielsweise die Umgebungstemperatur von transportierten Gütern überwacht werden müssen. Die Messvorrichtung kann in ein Sensormodul integriert werden, dass sehr flach ausgestaltet und preiswert herstellbar ist. Dabei ermöglicht der Lichtsensor im Zusammenspiel mit der Umgebung eines Transportbehälters eine einfache aber effektive Handhabung.

### Bezugszeichenliste:

- 101, 101': Messvorrichtung
- 102: Trägerelement
- 103: Messfühler
- 104: Elektronik
- 105: Batterie
- 106: Aktivierungselement
- 107, 107': Sensor
- 108, 108': Abdeckelement
- 109: Befestigungselement

## Patentansprüche

1. Vorrichtung (101, 101') zur Aufnahme von Messdaten für mindestens eine Messgröße, umfassend wenigstens ein Aktivierungselement (106) zur Aktivierung und/oder Deaktivierung eines Messvorgangs zur Aufnahme der Messdaten, wobei das Aktivierungselement (106) in Verbindung mit einer Elektronik (104) zur Steuerung des Messvorgangs steht,
**dadurch gekennzeichnet,**
**dass** das Aktivierungselement (106) mindestens einen Sensor (107, 107') umfasst, der Mittel zur Weiterleitung eines Impulses an die Elektronik (104) aufweist, wobei durch diesen Impuls der Messvorgang aktivierbar und/oder deaktivierbar ist, und dass die Elektronik (104) als organische Elektronik und jeder Sensor (107, 107') als lichtempfindlicher Sensor (107, 107') ausgebildet sind, und dass über jedem Sensor (107, 107') mindestens ein lichtundurchlässiges Abdeckelement (108, 108') angeordnet ist, wobei das Abdeckelement (108, 108') so ausgebildet ist, dass es einen Lichteinfall auf den jeweiligen Sensor (107, 107') verhindert und mechanisch entfernbar ist, und dass jeder Sensor (107, 107') so ausgebildet ist, dass der Impuls an die Elektronik (104) durch einen auftretenden Lichteinfall auf den Sensor (107, 107') auslösbar ist.

2. Vorrichtung (101, 101' nach Anspruch 1,
**dadurch gekennzeichnet,**
**dass** die Elektronik (104) Mittel zur Auswertung der zeitlichen Reihenfolge von Impulsen des mindestens einen Sensors (107, 107') umfasst, wobei durch einen ersten Impuls eines Sensors (107, 107') an die Elektronik (104) der Messvorgang aktivierbar ist, während der Messvorgang durch einen danach folgenden zweiten Impuls des Sensors (107, 107') an die Elektronik (104) deaktivierbar ist.

3. Vorrichtung (101, 101') nach einem der Ansprüche 1 und 2,
**dadurch gekennzeichnet,**
**dass** das Aktivierungselement (106) zwei Sensoren (107, 107') aufweist, wobei durch einen ersten Impuls eines ersten Sensors (107) an die Elektronik (104) der Messvorgang aktivierbar ist, während der Messvorgang durch einen danach folgenden zweiten Impuls des zweiten Sensors (107') an die Elektronik (104) deaktivierbar ist.

4. Vorrichtung (101, 101') nach einem der Ansprüche 1 bis 3,
**dadurch gekennzeichnet,**
**dass** die Messgröße eine Temperatur ist, und die Vorrichtung (101, 101') zur Aufnahme von Temperaturdaten einen Temperatursensor (107, 107') umfasst, der in Verbindung mit der Elektronik (104) steht.

5. Vorrichtung (101, 101') nach einem der Ansprüche 1 bis 4,
**dadurch gekennzeichnet,**
**dass** die Vorrichtung (101, 101') mindestens ein Befestigungselement (109) aufweist, mit dem die Vorrichtung (101, 101') an einem Objekt angebracht werden kann, wobei das Befestigungselement (109) so ausgebildet und an der Vorrichtung (101, 101') angeordnet ist, dass der Lichteinfall auf den mindestens einen Sensor (107, 107') bei Anbringung an einem Objekt unterbrechbar ist.

6. Vorrichtung (101, 101') nach Anspruch 5,
**dadurch gekennzeichnet,**
**dass** das Befestigungselement (109) wenigstens eine Klebefläche umfasst.

7. Vorrichtung (101, 101') nach einem der Ansprüche 1 bis 6,
**dadurch gekennzeichnet,**
**dass** das Abdeckelement (108) aus einem flexiblen Material ausgebildet ist, das mittels Klebstoff über dem mindestens einen Sensor (107, 107') haftet.

8. Vorrichtung (101, 101') nach einem der Ansprüche 1 bis 7,
**dadurch gekennzeichnet,**
**dass** das Abdeckelement (108) als abkratzbare Folie (Scratch-off Folie) ausgebildet ist, die mittels Heißprägeverfahren über dem mindestens einen Sensor (107, 107') aufgebracht ist.

9. Vorrichtung (101, 101') nach einem der Ansprüche 1 bis 8,
**dadurch gekennzeichnet,**
**dass** das Abdeckelement (108) aus einem inflexiblen Material ausgebildet und verschiebbar über dem mindestens einen Sensor (107, 107') angeordnet ist.

10. Vorrichtung (101, 101') nach einem der Ansprüche 1 bis 9,
**dadurch gekennzeichnet,**
**dass** die Elektronik (104) und/oder der Sensor (107, 107') aufgedruckt sind, und dass eine Energiequelle Bestandteil der Elektronik (104) ist.

11. Verfahren zur Aufnahme von Messdaten für mindestens eine Messgröße mit einer Vorrichtung (101, 101') gemäß einem der Ansprüche 1 bis 10, bei dem ein Aktivierungselement (106) einen Messvorgang zur Aufnahme der Messdaten aktiviert und/oder deaktiviert und eine Elektronik (104) den Messvorgang steuert,
**dadurch gekennzeichnet,**
**dass** durch mechanisches Entfernen des mindestens einen lichtundurchlässigen Abdeckelements (108, 108') von dem mindestens einen Sensor (107, 107') kurzfristig Licht auf den lichtempfindlichen Sensor (107, 107') auftrifft, wodurch der Sensor (107, 107') mindestens einen Impuls erzeugt und an die Elektronik (104) weiterleitet, wobei dieser Impuls über die Elektronik (104) eine Aktivierung und/oder Deaktivierung des Messvorgangs auslöst.

12. Verfahren nach Anspruch 11,
**dadurch gekennzeichnet,**
**dass** das Abdeckelement (108, 108') zur Freigabe des Lichteinfalls auf den mindestens einen Sensor (107, 107') von dem Sensor (107, 107') abgezogen, abgekratzt oder auf diesem verschoben wird.

13. Verfahren nach einem der Ansprüche 11 und 12,
**dadurch gekennzeichnet,**
**dass** für den Beginn der Aufnahme der Messdaten für die Messgröße ein erstes Abdeckelement (108) von einem ersten Sensor (107) entfernt wird, und dass der erste Sensor (107) durch das folgende Auftreffen von Licht einen ersten Impuls erzeugt und an die Elektronik (104) weiterleitet, was die Aktivierung des Messvorgangs auslöst, und dass für die Beendigung der Aufnahme der Messdaten für die Messgröße ein zweites Abdeckelement (108') von einem zweiten Sensor (107') entfernt wird, wobei der zweite Sensor (107') durch das folgende Auftreffen von Licht einen zweiten Impuls erzeugt und an die Elektronik (104) weiterleitet, was die Deaktivierung des Messvorgangs auslöst.

14. Verfahren nach einem der Ansprüche 11 bis 13,
**dadurch gekennzeichnet,**
**dass** für den Beginn der Aufnahme der Messdaten für die Messgröße das Abdeckelement (108, 108') von einem Sensor (107, 107') entfernt wird, und dass der Sensor (107, 107') durch das nachfolgende Auftreffen von Licht auf den Sensor (107, 107') einen ersten Impuls erzeugt und an die Elektronik (104) weiterleitet, was die Aktivierung des Messvorgangs auslöst, und dass dieser Sensor (107, 107') nach der Aktivierung des Messvorgangs wieder abgedeckt wird, und dass der gleiche Sensor (107, 107') für die Beendigung der Aufnahme der Messdaten für die Messgröße erneut Licht ausgesetzt wird, wodurch das erneute Auftreffen von Licht auf diesen Sensor (107, 107') einen zweiten Impuls erzeugt, der von dem Sensor (107, 107') an die Elektronik (104) weitergeleitet wird, was die Deaktivierung des Messvorgangs auslöst.

15. Verfahren nach Anspruch 14,
**dadurch gekennzeichnet,**
**dass** die Vorrichtung (101, 101') nach der Aktivierung des Messvorgangs zum Abdecken des Sensors (107, 107') mittels eines Befestigungselements (109) so an einem Objekt angebracht wird, dass der Lichteinfall auf den Sensor (107, 107') unterbrochen ist.
